(19) Europäisches Patentamt
European Patent Office
Office européen des brevets

(11) **EP 4 797 368 A1**

(12) **EUROPEAN PATENT APPLICATION**
published in accordance with Art. 153(4) EPC

(43) Date of publication:
**26.08.2026 Bulletin 2026/35**

(21) Application number: **24879150.1**

(22) Date of filing: **18.10.2024**

(51) International Patent Classification (IPC):
***H01M 10/0525*** *(2010.01)* ***H01M 50/186*** *(2021.01)*
***H01M 50/531*** *(2021.01)* ***H01M 50/533*** *(2021.01)*

(52) Cooperative Patent Classification (CPC):
**H01M 10/0525; H01M 50/186; H01M 50/531; H01M 50/533;** Y02E 60/10

(86) International application number:
**PCT/CN2024/125884**

(87) International publication number:
**WO 2025/082510 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 CN 202311356267**

(71) Applicant: **Xiamen Ampace Technology Limited**
**Xiamen City, Fujian Province 361000 (CN)**

(72) Inventors:
- **ZHANG, Shangen**
**Xiamen, Fujian 361000 (CN)**
- **CHEN, Minjing**
**Xiamen, Fujian 361000 (CN)**

(74) Representative: **Kraus & Lederer PartGmbB**
**Thomas-Wimmer-Ring 15**
**80539 München (DE)**

(54) **BATTERY CELL AND BATTERY**

(57) This application discloses a cell and a battery. The cell includes a positive electrode tab, a negative electrode tab, and a packaging bag. The packaging bag has a sealing region. The sealing region includes a first sealing segment, a second sealing segment, and a third sealing segment. The third sealing segment includes a first corner-cutting segment disposed on a side of the positive electrode tab far away from the negative electrode tab in a width direction of the cell, and a second corner-cutting segment disposed on a side of the negative electrode tab far away from the positive electrode tab in the width direction of the cell; and S includes an orthographic projection area S1 of the first corner-cutting segment in a thickness direction of the cell and an orthographic projection area S2 of the second comer-cutting segment in the thickness direction of the cell, where S1 and S2 satisfy $0.75 \leq S1/S2 \leq 0.99$. Some embodiments of this application provide a design of cutting corner parts of the packaging bag to varying degrees at a positive electrode side and a negative electrode side, to specifically address glue overflow of varying degrees on the positive electrode side and the negative electrode side, enhancing performance stability of the cell.

20
130（1302）
1
10
110
130（1301）
100
X
Z
Y
120
120
40

FIG. 1

EP 4 797 368 A1

## Description

### TECHNICAL FIELD

This application relates to the field of electrochemical apparatus technologies, and in particular, to a cell and a battery.

### BACKGROUND

To satisfy demand for a high energy density of lithium-ion batteries made in recent years, higher design requirements are imposed for a packaging structure of a cell besides optimizing and innovating battery materials to enhance battery stability.

### SUMMARY

The inventors have found that, in a progress of packaging a cell of a packaging bag, a top seal and a side seal at a corner part of the packaging bag may overlap, and glue overflow easily occurs, posing a safety risk of tearing-induced aluminum leakage at the corner part of the packaging bag.

An embodiment of this application provides a cell and a battery that can address an issue of glue overflow of the packaging bag of the cell affecting performance stability of the cell.

According to a first aspect, an embodiment of this application provides a cell, including a positive electrode tab, a negative electrode tab, and a packaging bag, where the packaging bag has a sealing region.

The sealing region includes a first sealing segment, two second sealing segments, and a third sealing segment; the positive electrode tab and the negative electrode tab are arranged side by side in a width direction of the cell, and both extend beyond the packaging bag through the first sealing segment; the second sealing segment and the first sealing segment are arranged at an included angle; the third sealing segment is connected between the first sealing segment and the second sealing segment; and the third sealing segment has a curved outer edge.

The third sealing segment has an orthographic projection area S in a thickness direction of the cell; the third sealing segment includes a first corner-cutting segment disposed on a side of the positive electrode tab far away from the negative electrode tab in the width direction of the cell and a second corner-cutting segment disposed on a side of the negative electrode tab far away from the positive electrode tab in the width direction of the cell; and S includes an orthographic projection area S1 of the first corner-cutting segment in the thickness direction of the cell and an orthographic projection area S2 of the second corner-cutting segment in the thickness direction of the cell, where S1 and S2 satisfy $0.75 \leq S1/S2 \leq 0.99$.

In some example embodiments, the curved outer edge has a first endpoint, a first tangent line passing through the first endpoint, a second endpoint, and a second tangent line passing through the second endpoint.

The first sealing segment has a first inner edge and a first outer edge parallel to each other; the first outer edge is connected to the first endpoint; the second sealing segment has a second inner edge and a second outer edge parallel to each other; and the second outer edge is connected to the second endpoint.

The third sealing segment is defined by the curved outer edge, a first straight line that passes through the first endpoint and is perpendicular to the first tangent line, a second straight line that passes through the second endpoint and is perpendicular to the second tangent line, the first inner edge, and the second inner edge.

In some example embodiments, a preset corner-cutting region is defined by the curved outer edge, an extension line of the first outer edge, and an extension line of the second outer edge, and an area of the preset corner-cutting region is S', where S and S' satisfy $0.2 \leq S'/S \leq 0.5$.

In some example embodiments, the cell includes a cell body, and the packaging bag has an accommodation space configured to accommodate the cell body; the second sealing segment and the third sealing segment are disposed on a side of the second inner edge far away from the accommodation space in the width direction of the cell, and a sum of orthographic projection areas of the second sealing segment and the third sealing segment in the thickness direction of the cell is A, where $142.56\ mm^2 \leq A \leq 2292.56\ mm^2$; and/or a total length of the packaging bag in a length direction of the cell is $L_w$, where $L_w$ satisfies $30\ mm \leq L_w \leq 330\ mm$.

In some example embodiments, the first outer edge and the first tangent line are collinear; and/or the second outer edge and the second tangent line are collinear; and/or S and S' satisfy $0.2 \leq S'/S \leq 0.40$.

In some example embodiments, S1 and S2 satisfy $0.80 \leq S1/S2 \leq 0.90$.

In some example embodiments, a width of the second sealing segment in the width direction of the cell is w1, the curved outer edge is an arc-shaped outer edge, and a radius of the arc-shaped outer edge is r, where w1 and r satisfy $0.8 \leq r/w1 \leq 1.2$.

In some example embodiments, the first sealing segment has a first outer edge connected to the arc-shaped

outer edge, and an included angle $\alpha$ exists between a tangent line at a midpoint of the arc-shaped outer edge and an extension line of the first outer edge, where $\alpha$ satisfies $10° \leq \alpha \leq 80°$; and/or w1 satisfies 5 mm≤w1≤10 mm.

In some example embodiments, one of the second sealing segments is connected to the first corner-cutting segment, the other second sealing segment is connected to the second corner-cutting segment, and the second sealing segments have a second outer edge; in the width direction of the cell, a distance between the second outer edge of the second sealing segment connected to the first corner-cutting segment and the positive electrode tab is L1, where L1 satisfies 2 mm≤L1≤60 mm; and/or in the width direction of the cell, a distance between the second outer edge of the second sealing segment connected to the second corner-cutting segment and the negative electrode tab is L2, where L2 satisfies 2 mm≤L2≤60 mm.

In some example embodiments, in the thickness direction of the cell, a thickness of the sealing region is H, where H satisfies 0.15 mm ≤H≤0.3 mm.

In some example embodiments, the packaging bag is an aluminum plastic film, the aluminum plastic film includes a middle substrate, aluminum layers disposed on two opposite sides of the middle substrate, a bonding layer disposed on a surface of the aluminum layer, a thickness of each of the aluminum layers is h1, where h1 satisfies 20 μm≤h1≤60 μm.

In some example embodiments, the cell includes a cell body; the packaging bag includes one layer of aluminum plastic film, the aluminum plastic film wraps from one side of the cell body to another side of the cell body, and bonding is performed on the aluminum plastic film on an outer side of the cell body to form the sealing region including one first sealing segment, two second sealing segments, and two third sealing segments; or the packaging bag includes two layers of aluminum plastic film, the cell body is sandwiched between the two layers of aluminum plastic film, and bonding is performed on the aluminum plastic film on an outer side of the cell body to form the sealing region including two first sealing segments, two second sealing segments, and four third sealing segments.

According to a third aspect, an embodiment of this application further provides a battery, including a housing and the cell described above, where the cell is disposed in an internal space of the housing.

Based on the cell and the battery in these embodiments of this application, these embodiments of this application provide a design of cutting corner parts of the packaging bag to varying degrees at the positive electrode side and the negative electrode side, to specifically address glue overflow of varying degrees on the positive electrode side and the negative electrode side, enhancing performance stability of the cell, improving an energy density of the cell, alleviating cell deformation, reducing corrosion of the cell, improving both cycling performance and vibration performance of the cell, and increasing a pass rate of the cell in a hot-box test.

## BRIEF DESCRIPTION OF DRAWINGS

To describe the technical solutions in some embodiments of this application or in the prior art more clearly, the following briefly describes the accompanying drawings required for describing these embodiments or the prior art. It is clear that the accompanying drawings in the following descriptions show only some embodiments of this application, and persons skilled in the art may still derive other drawings from these accompanying drawings without creative efforts.

FIG. 1 is a schematic three-dimensional structural diagram of a cell according to an embodiment of this application;
FIG. 2 is a schematic cross-sectional structural diagram of a cell according to an embodiment of this application;
FIG. 3 is a schematic structural diagram of a sealing region having two third sealing segments according to an embodiment of this application;
FIG. 4 is a schematic structural diagram of one third sealing segment according to an embodiment of this application;
FIG. 5 is a schematic structural diagram of a center of one curved outer edge located at a second inner edge according to an embodiment of this application;
FIG. 6 is a schematic cross-sectional structural diagram of two layers of aluminum plastic film in a sealing region according to an embodiment of this application; and
FIG. 7 is a schematic structural diagram of a sealing region having four third sealing segments according to an embodiment of this application.

Reference signs:

1. cell; 10. positive electrode tab; 20. negative electrode tab; 40. cell body;
30. packaging bag; 31. middle substrate; 32. aluminum layer; 33. bonding layer;
100. sealing region; 200. accommodation space; 300. preset corner-cutting region;
110. first sealing segment; 111. first inner edge; 112. first outer edge;
120. second sealing segment; 121. second inner edge; 122. second outer edge; 101. inner angle vertex; 102. outer

angle vertex;
130. third sealing segment; 1301. first corner-cutting segment; 1302. second corner-cutting segment;
131: curved outer edge; 132. first endpoint; 133. second endpoint; 134. first tangent line; 135. second tangent line;
136. first straight line; 137. second straight line; X. length direction; Y. width direction; and Z. thickness direction.

## DETAILED DESCRIPTION

To make the objectives, technical solutions, and advantages of this application more comprehensible, the following describes this application in detail with reference to accompanying drawings and some embodiments. It should be understood that the specific embodiments described herein are merely used to explain this application but are not intended to limit this application.

In related technologies, a top seal and a side seal of a cell packaging bag are connected end to end and enclose a periphery of a cell body. The cell body has a thickness. During a packaging process, overlap easily occurs at a corner part (that is, a connection part of the top seal and side seal) of the packaging bag, posing a safety risk of tearing-induced aluminum leakage. The inventor has found that for the issue of overlap between the top seal and the side seal, a corner-cutting solution can be used, that is, removing a part of a material at the corner part of the packaging bag, to reduce the risk of aluminum leakage of the packaging bag during heat sealing.

A tab structure of the cell typically extends beyond the packaging bag from the top seal of the packaging bag. The tab structure includes a positive electrode tab and a negative electrode tab arranged side by side. In the packaging process of the cell, because a heat sealing temperature of a side seal on a positive electrode tab side differs from a heat sealing temperature of a side seal on a negative electrode tab side, glue overflow may occur on both sides to varying degrees. This causes compression of a sealing zone of the cell and a cell body, resulting in deformation of the cell. This affects an energy density of the cell, and degrades cycling performance of the cell and a vibration resistance performance of the cell. Especially at a part where the top seal and the side seal of the cell packaging bag overlap, a difference in packaging temperatures further increases the risk of aluminum leakage caused by wrinkling and tearing of the packaging bag.

Based on the foregoing content, some embodiments of this application provide a design of cutting corner parts of the packaging bag to varying degrees at the positive electrode side and the negative electrode side, to specifically address glue overflow of varying degrees on the positive electrode side and the negative electrode side, thereby enhancing overall stability of the cell, increasing an energy density of the cell, alleviating cell deformation, reducing corrosion of the cell, improving both the cycling performance and the vibration resistance performance of the cell, and increasing a pass rate in a hot-box test.

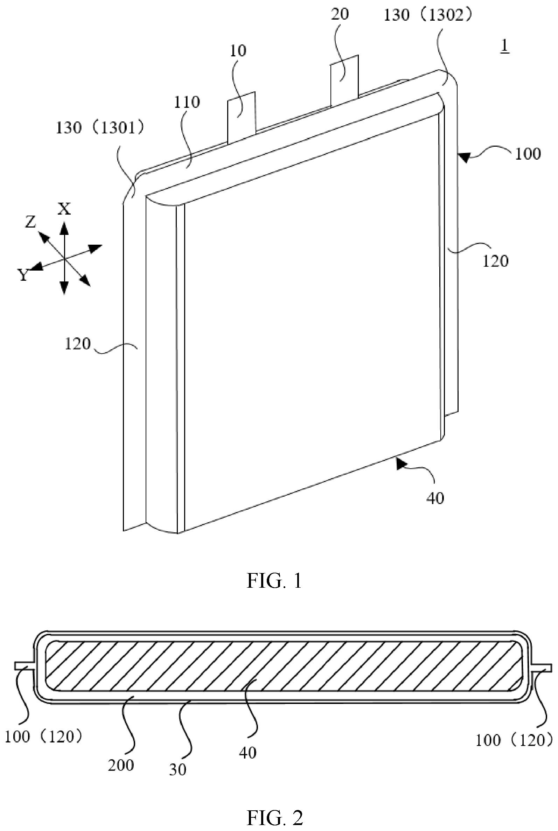

FIG. 1 and FIG. 2 are schematic structural diagrams of a cell 1 according to an embodiment of this application. The cell 1 includes a packaging bag 30, a cell body 40, and an electrolyte. The packaging bag 30 has a sealing region 100 and an accommodation space 200. The cell body 40 is disposed in the accommodation space 200. The electrolyte fills the accommodation space 200, infiltrating the cell body 40. The sealing region 100 encloses a periphery of the accommodation space 200, so that the accommodation space 200 forms a closed space to prevent overflow of the electrolyte in the accommodation space 200. In this embodiment of this application, the sealing region 100 of the packaging bag 30 may be formed through melting and bonding of a material of the packaging bag 30. For example, the sealing region 100 is manufactured through heat sealing, to achieve sealing of the sealing region 100.

The cell 1 further includes a positive electrode tab 10 and a negative electrode tab 20. Both the positive electrode tab 10 and the negative electrode tab 20 are connected to the cell body 40, and extend beyond the packaging bag 30 from the sealing region 100. Specifically, the cell body 40 includes a positive electrode plate, a negative electrode plate, and a separator. The positive electrode plate, the separator, and the negative electrode plate are stacked in sequence to form the cell body 40, meaning that the cell body 40 is a laminated cell body. Alternatively, the positive electrode plate, the separator, and the negative electrode plate are stacked in sequence and wound to form the cell body 40, meaning that the cell body 40 is a wound cell body.

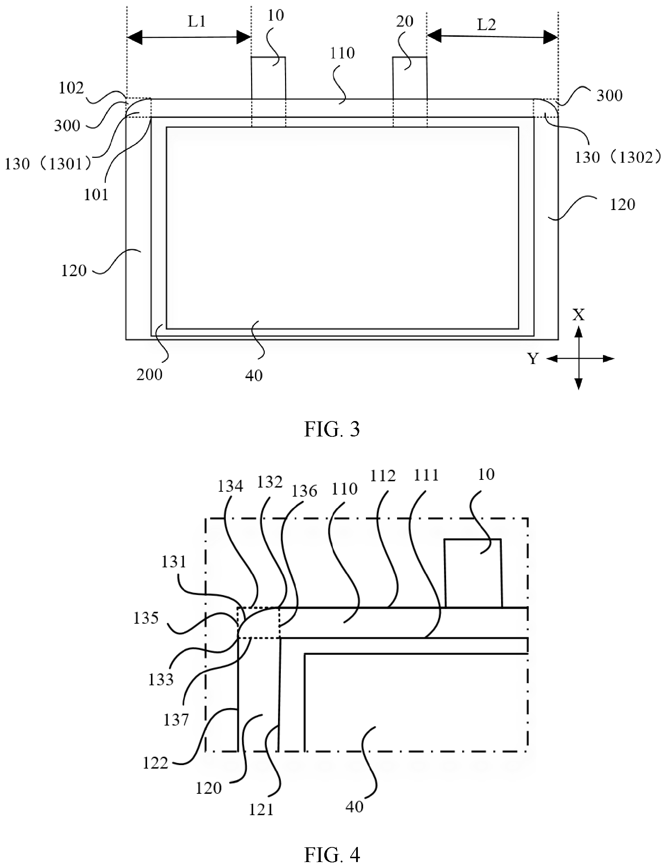

The positive electrode tab 10 is electrically connected to the positive electrode plate. The negative electrode tab 20 is electrically connected to the negative electrode plate. A stacking direction of the positive electrode plate, the separator, and the negative electrode plate is a thickness direction Z of the cell 1. As shown in FIG. 3, the positive electrode tab 10 is electrically connected to the positive electrode plate and extends beyond the packaging bag 30 in a length direction X of the cell 1, and the negative electrode tab 20 is electrically connected to the negative electrode plate and extends beyond the packaging bag 30 in the length direction X of the cell 1. The positive electrode tab 10 and the negative electrode tab 20 are arranged side by side in a width direction Y of the cell 1. The length direction X, width direction Y, and thickness direction Z of the cell 1 are mutually perpendicular.

It can be understood that the cell body 40 formed by stacking or winding the positive electrode plate, the separator, and the negative electrode plate has a specific thickness in the thickness direction Z of the cell 1, and therefore when the cell body 40 is disposed in the accommodation space 200 of the packaging bag 30, wrinkles easily occur in the sealing region 100 of the packaging bag 30 during packaging of the sealing region 100 of the packaging bag 30, affecting

performance stability of the cell 1. A material of the sealing region 100 of the packaging bag 30 is folded and stored at a corner part. This can improve flatness of the rest region of the sealing region 100 and alleviate compression of the packaging bag 30 on the cell body 40 and a housing of a battery. However, storing the material at the corner part easily leads to material accumulation, and worsens glue overflow at the corner part, and the overflowing glue may compress the cell body 40, the housing of the battery, and other structures. In this application, flatness of the packaging bag 30 is improved and glue overflow of the packaging bag 30 is alleviated by cutting part of the material at the corner part of the packaging bag 30, to lower a probability of contact between the packaging bag 30 and other structures, thereby improving the cycling performance and vibration resistance of the cell 1.

Specifically, as shown in FIG. 3, the sealing region 100 includes a first sealing segment 110, a second sealing segment 120, and a third sealing segment 130. The positive electrode tab 10 and the negative electrode tab 20 are arranged side by side in the width direction Y of the cell 1, and both extend beyond the packaging bag 30 through the first sealing segment 110. The second sealing segment 120 and the first sealing segment 110 are arranged at an included angle. The third sealing segment 130 is connected between the first sealing segment 110 and the second sealing segment 120. During the packaging of the packaging bag 30, the material of the packaging bag 30 is folded and stored at a corner part between the second sealing segment 120 and the first sealing segment 110, and then the corner part is cut to form the third sealing segment 130. A region cut away from the corner part is a region where glue overflow occurs, and a material retained in the third sealing segment 130 obtained through cutting is less than a material at the corner part before cutting. This reduces a probability of compression between the third sealing segment 130 and another structure outside the cell, effectively improving the cycling performance and the vibration resistance performance of the cell.

The second sealing segment 120 is provided in a quantity of two. In the width direction Y of the cell 1, the positive electrode tab 10 and the negative electrode tab 20 are disposed between the two second sealing segments 120. During heat sealing of the packaging bag 30, there is a difference between heat sealing temperatures at the two second sealing segments 120. For example, in the width direction Y of the cell 1, a heat sealing temperature of the second sealing segment 120 is higher on a side of the positive electrode tab 10 far away from the negative electrode tab 20, while a heat sealing temperature of the second sealing segment 120 is lower on a side of the negative electrode tab 20 far away from the positive electrode tab 10. The third sealing segment 130 is directly connected to the second sealing segment 120, and a temperature is the same as or similar to a temperature of the second sealing segment 120 connected thereto. When glue overflow occurs, a higher heating temperature means a higher degree of glue overflow. Therefore, due to a difference in the heat sealing temperatures of the second sealing segments 120, a corner part is cut to varying degrees at the third sealing segment 130 based on the different heat sealing temperatures in this embodiment of this application.

Specifically, the third sealing segment 130 has an orthographic projection area S in the thickness direction Z of the cell 1. The third sealing segment 130 includes a first corner-cutting segment 1301 disposed on the side of the positive electrode tab 10 far away from the negative electrode tab 20 in the width direction Y of the cell 1, and a second corner-cutting segment 1302 disposed on the side of the negative electrode tab 20 far away from the positive electrode tab 10 in the width direction Y of the cell 1. The area S includes an orthographic projection area S1 of the first corner-cutting segment 1301 in the thickness direction Z of the cell 1 and an orthographic projection area S2 of the second corner-cutting segment 1302 in the thickness direction Z of the cell 1, where $S1<S2$, meaning that a material retained at the first corner-cutting segment 1301 is less than a material retained at the second corner-cutting segment 1302. During the heat sealing process, a heat sealing temperature of the first corner-cutting segment 1301 is higher than a heat sealing temperature of the second corner-cutting segment 1302. This corner-cutting design can prevent different amounts of glue overflow from causing different deformation in different regions of the cell 1, to improve the structural stability of the cell 1 and overall performance stability of the cell.

Herein, S1 and S2 satisfy $0.75 \leq S1/S2 \leq 0.99$. For example, S1/S2 may be 0.75, 0.79, 0.82, 0.85, 0.88, 0.90, 0.99, or a range defined by any two of these values. When S1/S2 is within the range of 0.75 to 0.99, the overflowing glue on both sides of the positive electrode and the negative electrode can be more thoroughly removed. This appropriate cutting range can reduce the compression between the cell body and the packaging bag when the cell is placed in the battery housing, and lower a probability of compression between the packaging bag and another structure outside the cell. In addition, with appropriate effective sealing areas at the first corner-cutting segment 1301 and the second corner-cutting segment 1302, cracking is less likely to occur. Further, the third sealing segment 130 has high structural strength, and therefore is less prone to breakage. This reduces the risk of aluminum leakage of the packaging bag 30, minimizes corrosion of the cell 1 caused by moisture and oxygen in the air, ensures good cycling performance and vibration resistance performance of the cell 1, and improves a pass rate of the cell 1 in the hot-box test. If S1/S2 is less than the lower limit of 0.75, S1 is excessively small, resulting in an insufficient effective sealing area at the first corner-cutting segment 1301; or S2 is excessively large, leading to incomplete removal of overflowing glue at the second corner-cutting segment 1302 on the negative electrode side of the cell 1, which degrades low-temperature cycling performance and lowers the pass rate of the cell 1 in the hot-box test. When S1/S2 is greater than the upper limit of 0.99, S1 of the first corner-cutting segment 1301 is excessively large. In this case, the sealing region 100 is likely to occupy a large space, potentially resulting in incomplete removal of the overflowing glue. Alternatively, S2 of the second corner-cutting segment 1302 is excessively small, which results in an

insufficient effective sealing area at the second corner-cutting segment 1302 and performance impairment of the cell 1, such as degradation of low-temperature cycling of the cell 1 and decline in the pass rate in the hot-box test. Preferably, S1 and S2 satisfy $0.80 \leq S1/S2 \leq 0.90$.

As shown in FIG. 4, a curved outer edge 131 has a first endpoint 132, a first tangent line 134 passing through the first endpoint 132, a second endpoint 133, and a second tangent line 135 passing through the second endpoint 133. The first sealing segment 110 has a first inner edge 111 and a first outer edge 112 parallel to each other. The first outer edge 112 is connected to the first endpoint 132. The second sealing segment 120 has a second inner edge 121 and a second outer edge 122 parallel to each other. The second outer edge 122 is connected to the second endpoint 133. A third sealing segment 130 is defined by the curved outer edge 131, a first straight line 136 that passes through the first endpoint 132 and is perpendicular to the first tangent line 134, a second straight line 137 that passes through the second endpoint 133 and is perpendicular to the second tangent line 135, the first inner edge 111, and the second inner edge 121.

With reference to FIG. 3 and FIG. 4, the first inner edge 111 and the second inner edge 121 intersect at an inner angle vertex 101, while an extension line of the first outer edge 112 and an extension line of a second outer edge 122 intersect at an outer angle vertex 102. During heat sealing, hot pressing may first be performed on an outer part of the accommodation space 200 in the length direction X of the cell 1 and on the outer part of the accommodation space 200 in the width direction Y of the cell 1, so as to manufacture the first sealing segment 110, the second sealing segment 120, and the corner part connected between the first sealing segment 110 and the second sealing segment 120. Cutting is then performed on the corner part to remove a part near the outer angle vertex 102, that is, to obtain the third sealing segment 130 through cutting. In this way, the sealing region 100 having the first sealing segment 110, the second sealing segment 120, and the third sealing segment 130 is manufactured.

A preset corner-cutting region 300 is defined by the curved outer edge 131, the extension line of the first outer edge 112, and the extension line of the second outer edge 122. The preset corner-cutting region 300 is a part cut away from the corner part. The third sealing segment 130 is a part remained after cutting is performed on the corner part. Optionally, the first outer edge 112 and the first tangent line 134 are collinear; and/or the second outer edge 122 and the second tangent line 135 are collinear. The curved outer edge 131, the first outer edge 112, and the second outer edge 122 are designed in the foregoing manner for more efficient removal of the preset corner-cutting region 300 at the corner part, and a structure of the third sealing segment 130 is flat and is not prone to wrinkling. In addition, the design of the curved outer edge can effectively reduce burrs in the two sealing regions.

An area of the preset corner-cutting region 300 is S', where S and S' satisfy $0.2 \leq S'/S \leq 0.5$. For example, S'/S may be 0.2, 0.28, 0.35, 0.42, 0.45, 0.50, or a range defined by any two of these values. When S'/S is within the range of 0.2 to 0.5, the third sealing segment 130 has a sufficient sealing capability, and the overflowing glue at the corner part is removed, to prevent the overflowing glue at the corner part from compressing another structure. This helps improve the low-temperature cycling performance of the cell 1 and the pass rate in the hot-box test. When S'/S is less than the lower limit of 0.2, the part cut away from the corner part is small, leading to ineffective removal of the overflowing glue, which results in degradation of the low-temperature cycling performance of the cell 1 and decline in the pass rate in hot-box test. When S'/S is greater than the upper limit of 0.5, the part cut away from the corner part is large, leading to insufficient effective sealing of the third sealing segment 130, which results in degradation of low-temperature cycling of the cell 1 and decline in the pass rate in the hot-box test. Preferably, S and S' satisfy $0.2 \leq S'/S \leq 0.40$.

Optionally, as shown in FIG. 4, the corner part of the packaging bag 30 is partially removed in only the width direction Y of the cell 1 to form the third sealing segment 130. In this case, in the width direction Y of the cell 1, the second sealing segment 120 and the third sealing segment 130 connected thereto are on a same side of the accommodation space 200. Further, the second inner edge 121 and the first straight line 136 are collinear, and a corner-cutting seal and the first sealing segment 110 intersect at a line where the second inner edge 121 is located. Alternatively, the corner part of the packaging bag 30 is partially removed in only the length direction X of the cell 1 to form the third sealing segment 130. In this case, in the length direction X of the cell 1, the first sealing segment 110 and a corner-cutting seal connected thereto are on a same side of the accommodation space 200. Further, as shown in FIG. 4, the first inner edge 111 and the second straight line 137 are collinear, and the third sealing segment 130 and the second sealing segment 120 intersect at a line where the first inner edge 111 is located. Alternatively, the corner part of the packaging bag 30 is partially removed in both the width direction Y and the length direction X of the cell 1 to form the third sealing segment 130.

When the second sealing segment 120 and the third sealing segment 130 are disposed on a side of the second inner edge 121 far away from the accommodation space 200 in the width direction Y of the cell 1, a sum of orthographic projection areas of the second sealing segment 120 and the third sealing segment 130 connected thereto in the thickness direction Z of the cell 1 is A, where A satisfies $142.56\ mm^2 \leq A \leq 2292.56\ mm^2$. For example, A may be 142.56 $mm^2$, 150.20 $mm^2$, 400.50 $mm^2$, 991.22 $mm^2$, 1420.56 $mm^2$, 1987.52 $mm^2$, 2008.36 $mm^2$, 2292.56 $mm^2$, or a range defined by any two of these values. In this embodiment of this application, the sealing region 100 includes the two second sealing segments 120, and third sealing segments 130 connected to the same second sealing segments 120 are disposed on a side of the second inner edge 121 far away from the accommodation space 200 in the width direction Y of the cell 1. Further, values of A are both within the range of 142.56 $mm^2$ to 2292.56 $mm^2$. In this way, when the second sealing segments 120 on the

positive electrode side and the negative electrode side have different heat sealing temperatures, an effective sealing structure can be formed in the width direction Y of the cell 1. When A is less than the lower limit of 142.56 $mm^2$, the sealing is insufficient, leading to deformation of the cell 1 due to swelling and contraction to various degrees in a charge process and discharge process. This further degrades the cycling performance and lowers the pass rate of the cell 1 in the hot-box test. When A is greater than the upper limit of 2292.56 $mm^2$, a packaging region occupies an excessively large space, resulting in a reduction in a space for electrolyte storage in the packaging bag 30, which decreases the energy density of the cell 1 and degrades the low-temperature cycling performance of the cell 1.

Optionally, the curved outer edge 131 is an arc-shaped outer edge, a radius of the arc-shaped outer edge is r, and a width of the second sealing segment 120 in the width direction Y of the cell 1 is w1, where w1 and r satisfy $0.8 \le r/w1 \le 1.2$. For example, r/w1 may be 0.8, 0.85, 0.9, 1.0, 1.1, 1.2, or a range defined by any two of these values. The radius r and the width w1 are configured to satisfy the condition, so that the overflowing glue at the corner part can be completely removed and the third sealing segment 130 has a sufficient sealing capability, to prevent cracking of the third sealing segment 130. In addition, this can improve the low-temperature cycling performance of the cell 1, and increase the pass rate of the cell 1 in the hot-box test. When r/w1 is greater than 1.2, incomplete removal of the overflowing glue at the third sealing segment 130 easily occurs, resulting in degradation of the low-temperature cycling of the cell 1 and decline in the pass rate in the hot-box test. When r/w1 is less than 0.8, effective sealing of the third sealing segment 130 is insufficient, resulting in degradation of low-temperature cycling of the cell 1 and decline in the pass rate in the hot-box test.

Optionally, w1 satisfies 5 $mm \le w1 \le 10$ mm, for example, w1 may be 5 mm, 6 mm, 7 mm, 8 mm, 10 mm, or a range defined by any two of these values. When w1 is less than the lower limit of 5 mm, a packaging apparatus excessively compresses the cell 1, leading to deformation of the cell 1, degradation of the cycling performance, and decline in the pass rate in the hot-box test. When w1 is greater than the upper limit of 10 mm, the second sealing segment 120 is excessively wide, resulting in a reduction in a space for electrolyte storage in the packaging bag 30, which degrades the low-temperature cycling of the cell 1.

A size of the first sealing segment 110 in the length direction X of the cell 1 is $W_s$, where $W_s$ satisfies 3 $mm \le W_s \le 8$ mm. For example, $W_s$ may be 3 mm, 4 mm, 5 mm, 6 mm, 7 mm, 8 mm, or a range defined by any two of these values.

A size of the second sealing segment 120 in the length direction X of the cell 1 is $L_s$, where $L_s$ satisfies 18 $mm \le L_s \le 326$ mm. For example, $L_s$ may be 18 mm, 50 mm, 100 mm, 150 mm, 200 mm, 250 mm, 300 mm, 326 mm, or a range defined by any two of these values.

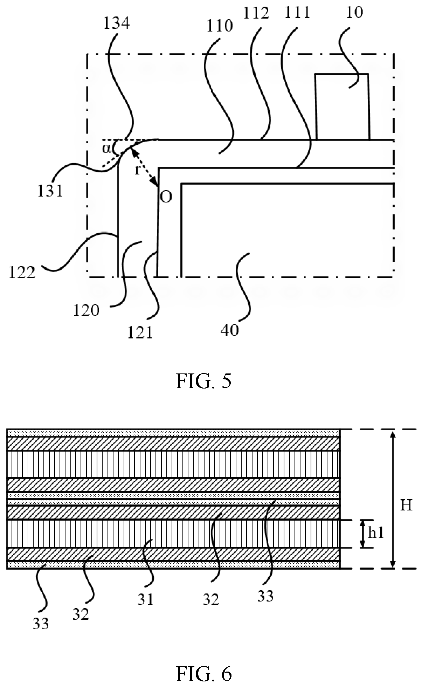

Optionally, as shown in FIG. 5, when the second sealing segment 120 and the third sealing segment 130 are disposed on a side of the second inner edge 121 far away from the accommodation space 200 in the width direction Y of the cell 1, a center O of the arc-shaped outer edge is located at the second inner edge 121.

As shown in FIG. 5, an included angle $\alpha$ exists between a tangent line at a midpoint of the arc-shaped outer edge and an extension line of the first outer edge 112, where $\alpha$ satisfies $10° \le \alpha \le 80°$. For example, $\alpha$ may be 10°, 20°, 40°, 50°, 60°, 70°, 80°, or a range defined by any two of these values. With $\alpha$ configured to be in the range of 10° to 80°, more overflowing glue at the corner part can be removed, and therefore the third sealing segment 130 obtained through cutting has great sealing strength. When $\alpha$ is less than the lower limit of 10°, the overflowing glue at the corner part of the cell 1 may not be completely removed, degrading high-temperature cycling performance of the cell 1 and the vibration resistance performance of the cell 1. When $\alpha$ is greater than the upper limit of 80°, there is a risk of excessive removal of the corner part, and therefore an area S of the remained third sealing segment 130 is small, leading to low sealing strength of the third sealing segment 130 and poor drop-proof performance of the cell 1.

In this embodiment of this application, the second sealing segment 120 is provided in a quantity of two, where one second sealing segment 120 is connected to the first corner-cutting segment 1301, and the other second sealing segment 120 is connected to the second corner-cutting segment 1302. Still refer to FIG. 3. In the width direction Y of the cell 1, a distance between a second outer edge 122 of the second sealing segment 120 connected to the first corner-cutting segment 1301 and the positive electrode tab 10 is L1, and a distance between a second outer edge 122 of the second sealing segment 120 connected to the second corner-cutting segment 1302 and the negative electrode tab 20 is L2. In this embodiment of this application, relative sizes of L1 and L2 are not specifically limited in this embodiment of this application, and can be selected based on an actual need, for example, L1>L2 or L1=L2. Both L1 and L2 are greater than or equal to 2 mm to prevent deformation caused by small distances from the positive electrode tab 10 and the negative electrode tab 20 to the second sealing segments 120 on corresponding sides. This ensures structural stability of the outer packaging, the cell body 40, and the tabs, thereby providing the cell 1 with good high-temperature cycling performance and vibration resistance performance.

Optionally, L1 satisfies 2 $mm \le L1 \le 60$ mm, for example, L1 may be 2 mm, 5 mm, 7 mm, 8 mm, 10 mm, 12 mm, or a range defined by any two of these values.

Optionally, L2 satisfies 2 $mm \le L2 \le 60$ mm, for example, L2 may be 2 mm, 4 mm, 6 mm, 8 mm, 10 mm, 12 mm, or a range defined by any two of these values.

As shown in FIG. 6, in the thickness direction Z of the cell 1, a thickness of the sealing region 100 is H. Preferably, thicknesses of the first sealing segment 110, the second sealing segment 120, and the third sealing segment 130 are all the

same and equal to H, where H satisfies 0.15 mm≤H≤0.3 mm. For example, H may be 2 mm, 4 mm, 6 mm, 8 mm, 10 mm, 12 mm, or a range defined by any two of these values. With H configured to be in the range of 0.15 mm to 0.3 mm, the sealing region 100 has good tear resistance strength, and the cell 1 exhibits excellent vibration resistance performance and drop-proof performance. When H is less than the lower limit of 0.15 mm, the thickness of the sealing region 100 is excessively thin and prone to cracking. When H is greater than the upper limit of 0.3 mm, the sealing region 100 is excessively thick, and occupies a large space. In addition, excessive glue overflow may easily occur due to a large amount of material at the corner part.

The packaging bag 30 is an aluminum plastic film. The aluminum plastic film includes a middle substrate 31, aluminum layers 32 disposed on two opposite sides of the middle substrate 31, and a bonding layer 33 disposed on a surface of the aluminum layer 32. The bonding layer 33 is a bonding layer 33 including a hot melt insulation material such as nylon, polyethylene, polypropylene, and polyvinylidene fluoride. During the packaging process, the bonding layer 33 in the sealing region 100 fuses for sealing. The aluminum layer 32 is configured to cooperate with the bonding layer 33 and the middle substrate 31 to provide the aluminum plastic film with high structural strength and plasticity, reducing a thickness of the aluminum plastic film.

A thickness of each of the aluminum layers 32 is h1, where h1 satisfies 20 μm≤h1≤60 μm. For example, h1 may be 20 μm, 30 μm, 40 μm, 45 μm, 50 μm, 60 μm, or a range defined by any two of these values. When h1 is less than the lower limit of 20 μm, during the heat sealing progress, under a same pressure, insufficient support from the aluminum layer 32 or excessive thickness of the bonding layer 33 may easily lead to excessive glue overflow, degrading the high-temperature cycling performance of the cell 1 and the vibration resistance performance of the cell 1. When h1 is greater than the upper limit of 60 μm, the aluminum layer 32 is excessively thick or the bonding layer 33 is excessively thin, leading to poor heat sealing effect and degradation of the high-temperature cycling performance of the cell 1 and the vibration resistance performance of the cell 1.

Optionally, the packaging bag 30 includes one layer of aluminum plastic film. As shown in FIG. 3, the aluminum plastic film wraps from one side of the cell body 40 to another side of the cell body 40. Bonding is performed on the aluminum plastic film on an outer side of the cell body 40 to form the sealing region 100 including one first sealing segment 110, two second sealing segments 120, and two third sealing segments 130. The first sealing segment 110 is disposed on one side of the accommodation space 200 in the length direction X of the cell 1. The two second sealing segments 120 are disposed on the two opposite sides of the accommodation space 200 in the width direction Y of the cell 1. In this case, cutting is performed only on two corner parts of the packaging bag 30 close to the tabs, to form the two third sealing segments 130. To be specific, one third sealing segment 130 is the first corner-cutting segment 1301, and the other third sealing segment 130 is the second corner-cutting segment 1302. The second sealing segment 120 close to the positive electrode tab 10 is connected to the first corner-cutting segment 1301, and the second sealing segment 120 close to the negative electrode tab 20 is connected to the second corner-cutting segment 1302.

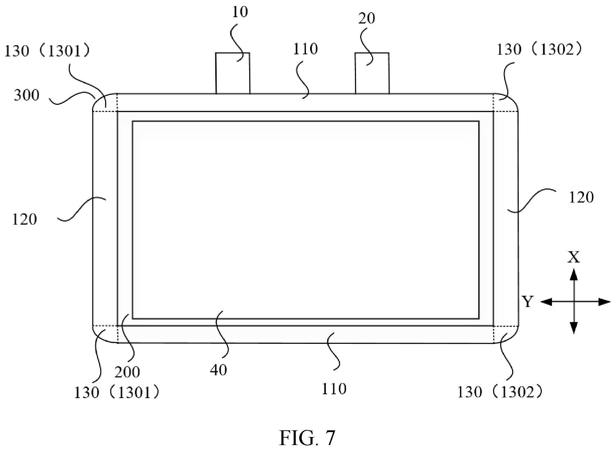

Optionally, as shown in FIG. 7, the packaging bag 30 includes two layers of aluminum plastic film, and the cell body 40 is sandwiched between the two layers of aluminum plastic film. Bonding is performed on the aluminum plastic film on an outer side of the cell body 40 to form the sealing region 100 including two first sealing segments 110, two second sealing segments 120, and four third sealing segments 130. The two first sealing segments 110 are disposed on the two opposite sides of the accommodation space 200 in the length direction X of the cell 1. The two second sealing segments 120 are disposed on the two opposite sides of the accommodation space 200 in the width direction Y of the cell 1. In this case, cutting is performed on all four corner parts of the packaging bag 30, to form the four third sealing segments 130. To be specific, the sealing region 100 includes two first corner-cutting segments 1301 and two second corner-cutting segments 1302. The second sealing segment 120 close to the positive electrode tab 10 is connected to the two first corner-cutting segments 1301, and the second sealing segment 120 close to the negative electrode tab 20 is connected to the two second corner-cutting segments 1302.

The positive electrode plate, negative electrode plate, separator, positive electrode tab, negative electrode tab, and electrolyte are not specifically limited in this embodiment of this application. The foregoing various components known in the art that can be used as the cell 1 are applicable to this application.

In some example embodiments, the negative electrode plate may include a negative electrode current collector and a negative electrode active material layer disposed on a surface of the negative electrode current collector. For example, the negative electrode current collector may be at least one of a copper foil current collector, an aluminum foil current collector, a nickel foil current collector, or a carbon-based current collector; and a thickness of the negative electrode current collector may be 1 μm to 200 μm. The negative electrode active material layer may be disposed to one surface or to two opposite surfaces of the negative electrode current collector. Further, in a thickness direction Z of the negative electrode plate, the negative electrode active material layer may be disposed only on part of the negative electrode current collector. For example, the thickness of the negative electrode active material layer may be 10 μm to 500 μm.

The negative electrode active material layer includes a negative electrode active material. For example, the negative electrode active material includes at least one of a lithium metal, natural graphite, artificial graphite, or a silicon-

based material. The silicon-based material includes at least one of silicon, a silicon-oxygen compound, a silicon-carbon compound, or a silicon alloy.

The negative electrode active material layer may further include a conductive agent and/or a binder. For example, the conductive agent in the negative electrode active material layer may include at least one of carbon black, acetylene black, Ketjen black, lamellar graphite, graphene, carbon nanotubes, carbon fibers, or carbon nanowires; and the binder in the negative electrode active material layer may include at least one of carboxymethyl cellulose CMC, polyacrylic acid, polyacrylic acid salt, polyacrylate, polyvinylpyrrolidone, polyaniline, polyimide, polyamideimide, silicone oil, styrene butadiene rubber, epoxy resin, polyester resin, polyurethane resin, or polyfluorene.

In some example embodiments, the positive electrode plate includes a positive electrode current collector and a positive electrode active material layer disposed on a surface of the positive electrode current collector. For example, an aluminum foil may be used for the positive electrode current collector, and certainly other positive electrode current collectors commonly used in the art may be used, and a thickness of the positive electrode current collector may be 1 μm to 200 μm. The positive electrode active material layer may be disposed to one surface or to two opposite surfaces of the positive electrode current collector. Further, in a thickness direction Z of the positive electrode plate, the positive electrode active material layer may be disposed only on part of the positive electrode current collector; and a thickness of the positive electrode active material layer may be 10 μm to 500 μm.

The positive electrode active material layer includes a positive electrode active material, and the positive electrode active material includes $LiCoO_2$, $LiNiO_2$, $LiMn_2O_4$, $LiCo_{1-y}MyO_2$, $LiNi_{1-y}MyO_2$, $LiMn_{2-y}MyO_4$, or $LiNi_xCo_yMn_zM_{1-x-y-z}O_2$, where M is selected from at least one of Fe, Co, Ni, Mn, Mg, Cu, Zn, Al, Sn, B, Ga, Cr, Sr, V, or Ti, and $0 \le y \le 1$, $0 \le x \le 1$, $0 \le z \le 1$, $x+y+z \le 1$. For example, the positive electrode active material may include at least one of lithium cobaltate, lithium manganate, lithium iron phosphate, lithium manganese iron phosphate, nickel cobalt lithium manganate, lithium nickel cobalt aluminate, or lithium nickel manganate, and the positive electrode active material may undergo doping and/or coating processing.

The positive electrode active material layer further includes a binder and a conductive agent. For example, the binder in the positive electrode active material layer may include at least one of polyvinylidene fluoride, a vinylidene fluoride-hexafluoropropylene copolymer, styrene-acrylate copolymer, styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene. The conductive agent in the positive electrode active material layer may include at least one of conductive carbon black, acetylene black, Ketjen black, lamellar graphite, graphene, carbon nanotubes, or carbon fiber.

In some example embodiments, the separator includes at least one of polyethylene, polypropylene, polyvinylidene fluoride, polyethylene terephthalate, polyimide, or aramid. For example, polyethylene includes at least one selected from high-density polyethylene, low-density polyethylene, or ultrahigh-molecular-weight polyethylene. Especially, polyethylene and polypropylene have a good effect on preventing short circuits and can improve stability of the cell 1 through a shutdown effect. A thickness of the separator is approximately 3 μm to 500 μm.

An embodiment of this application further provides a battery. The battery includes a housing and the cell 1 described above. The cell 1 is disposed in an internal space of the housing.

With a cell 1 of a lithium-ion battery used as an example, the following further describes this application with reference to specific examples. It should be understood that these examples are merely intended to illustrate this application but not to limit the scope of this application.

Performance of the cell 1 in various examples and comparative examples of this application is tested by using the following methods.

(1) Vibration resistance test

After the cell 1 was charged to 30% SOC (a remaining capacity of the cell 1) at 25°C, the cell 1 (or cell 1 with a clamper) was dropped freely onto a base (such as a marble base) from a height of 1.5 m in a 25°C test environment. Dropping was performed for each face of the cell 1 (including six faces: two opposite faces in the length direction X of the cell 1, two opposite faces in the width direction Y of the cell 1, and two opposite faces in the thickness direction Z of the cell 1). The test was conducted 20 rounds.

Pass criteria: No fire or explosion occurred, and after 20 rounds of drop test, an open-circuit voltage of the cell 1 was not lower than 90% of an open-circuit voltage of the cell 1 prior to the drop test.

(2) Hot-box test

At 25°C, the cell 1 was charged at a constant current to a full-charge voltage of 4.5 V at a rate of 0.5C. The charge was continued at a constant voltage of 4.5 V to a cut-off current of 0.05C, to ensure that the cell 1 was in a full-charge state. An appearance of the cell 1 was checked to ensure that the cell 1 was in a normal and usable state. The fully charged cell 1

was placed in an oven with a temperature rising to a specified hot-box test temperature of 130°C at a rate of 5°C/min. The temperature was maintained for one hour with a status of the cell 1 under observation.

Pass criteria: No fire or explosion occurred on the cell 1.

Pass rate in hot-box test=number of passes in hot-box test/total.

(3) Low-temperature cycling test

In an environment at -15°C, the cell 1 was charged at a constant current of 2C to a full-charge voltage (a maximum voltage of the battery was designed to be 4.5 V) and then charged at a constant voltage of the maximum voltage to a current of 0.02C. Then the cell 1 was discharged at a constant discharge current of 0.5C to a final voltage of 3.0 V. A discharge capacity of the first cycle was recorded. The above steps were repeated to implement the charge and discharge cycle 500 times, and a discharge capacity of a $500^{th}$ cycle was recorded.

Cycling capacity retention rate=(discharge capacity of the $500^{th}$ cycle/discharge capacity of the first cycle)×100%

(4) High-temperature cycling test

In an environment at 60°C, the cell 1 was charged at a constant current of 2C to a full-charge voltage (a maximum voltage of the battery was designed to be 4.5 V) and then charged at a constant voltage of the maximum voltage to a current of 0.02C. Then the cell 1 was discharged at a constant discharge current of 0.5C to a final voltage of 3.0 V. A discharge capacity of the first cycle was recorded. The above steps were repeated to implement the charge and discharge cycle 500 times, and a discharge capacity of a $500^{th}$ cycle was recorded.

Cycling capacity retention rate=(discharge capacity of the $500^{th}$ cycle/discharge capacity of the first cycle)×100%

In examples and comparative examples of this application, the packaging bag 30 included one layer of aluminum plastic film. The aluminum plastic film wrapped from one side of the cell body 40 to another side of the cell body 40, to form the sealing region 100 including one first sealing segment 110, two second sealing segments 120, and two third sealing segments 130. The second sealing segment 120 close to the positive electrode tab 10 was connected to one first corner-cutting segment 1301, and the second sealing segment 120 close to the negative electrode tab 20 was connected to one second corner-cutting segment 1302.

Results of the performance tests on the manufactured cell 1 in Examples 1-1 to 1-7 and Comparative examples 1-1 to 1-7 are shown in Table 1.

**Table 1**

| Item | S1 ($mm^2$) | S2 ($mm^2$) | S1/S2 | S' ($mm^2$) | S'/S1 | Low-temperature cycling test | Hot-box test |
|---|---|---|---|---|---|---|---|
| Example 1-1 | 38.40 | 51.20 | 0.75 | 15.36 | 0.4 | 86.50% | 9/10 |
| Example 1-2 | 38.40 | 48.00 | 0.8 | 15.36 | 0.4 | 88.20% | 10/10 |
| Example 1-3 | 38.40 | 45.18 | 0.85 | 15.36 | 0.4 | 89% | 10/10 |
| Example 1-4 | 38.40 | 42.67 | 0.9 | 15.36 | 0.4 | 88.50% | 10/10 |
| Example 1-5 | 38.40 | 38.79 | 0.99 | 15.36 | 0.4 | 86.10% | 9/10 |
| Comparative example 1-1 | 38.40 | 38.40 | 1 | 15.36 | 0.4 | 79% | 7/10 |
| Comparative example 1-2 | 38.40 | 32.00 | 1.2 | 15.36 | 0.4 | 78.50% | 6/10 |
| Comparative example 1-3 | 38.40 | 54.86 | 0.7 | 15.36 | 0.4 | 78.00% | 6/10 |
| Comparative example 1-4 | 38.40 | 64.00 | 0.6 | 15.36 | 0.4 | 77.50% | 6/10 |
| Example 1-6 | 38.40 | 48.00 | 0.8 | 7.68 | 0.2 | 88.00% | 10/10 |
| Example 1-7 | 38.40 | 48.00 | 0.8 | 19.2 | 0.5 | 87.1.00% | 10/10 |
| Example 1-8 | 38.40 | 48.00 | 0.8 | 13.44 | 0.35 | 88.20% | 10/10 |
| Example 1-9 | 38.40 | 48.00 | 0.8 | 17.28 | 0.45 | 87.20% | 10/10 |

(continued)

| Item | S1 ($mm^2$) | S2 ($mm^2$) | S1/S2 | S' ($mm^2$) | S'/S1 | Low-temperature cycling test | Hot-box test |
|---|---|---|---|---|---|---|---|
| Comparative example 1-5 | 38.40 | 48.00 | 0.8 | 23.04 | 0.6 | 83.10% | 8/10 |
| Comparative example 1-6 | 38.40 | 48.00 | 0.8 | 30.72 | 0.8 | 82.50% | 8/10 |
| Comparative example 1-7 | 38.40 | 48.00 | 0.8 | 3.84 | 0.1 | 83.00% | 8/10 |

From Examples 1-1 to 1-5 and Comparative examples 1-1 to 1-4 in Table 1, it can be learned that the orthographic projection area S1 of the first corner-cutting segment 1301 and the orthographic projection area S2 of the second corner-cutting segment 1302 satisfy $0.75 \leq S1/S2 \leq 0.99$, and the results of the low-temperature cycling test and the hot-box test of the manufactured cell 1 are optimized; and when S1/S2 is less than the lower limit of 0.75 or greater than the upper limit of 0.99, the results of the low-temperature cycling test and the hot-box test of the cell 1 decline. From Examples 1-1 to 1-5, it can be learned that, preferably, S1 and S2 satisfy $0.80 \leq S1/S2 \leq 0.90$, and the results of the low-temperature cycling test and the hot-box test of the cell 1 are further optimized.

In Table 1, from Examples 1-1 to 1-9 and Comparative examples 1-1 to 1-7, the orthographic projection area S1 of the first corner-cutting segment 1301 is used as a reference, and used as the orthographic projection area S of the third sealing segment 130 to compare with the area S' of the preset corner-cutting region 300. It can be learned from Examples 1-6 to 1-9 and Comparative examples 1-5 to 1-7, both S and S' satisfy $0.2 \leq S'/S \leq 0.5$, and the results of the low-temperature cycling test and the hot-box test of the manufactured cell 1 are optimized. Preferably, S and S' satisfy $0.2 \leq S'/S \leq 0.40$.

Results of the performance tests on the manufactured cell 1 in Examples 1-1 and 2-1 to 2-11 and Comparative examples 2-1 to 2-6 are shown in Table 1.

**Table 2**

| Item | w1 (mm) | r (mm) | r/w1 | A ($mm^2$) | $L_w$ (mm) | Hot-box test |
|---|---|---|---|---|---|---|
| Example 1-1 | 5.00 | 4.00 | 0.8 | 392.56 | 80 | 10/10 |
| Example 2-1 | 5.00 | 4.50 | 0.9 | 393.40 | 80 | 10/10 |
| Example 2-2 | 5.00 | 5.00 | 1 | 394.63 | 80 | 10/10 |
| Example 2-3 | 5.00 | 5.50 | 1.1 | 396.25 | 80 | 10/10 |
| Example 2-4 | 5.00 | 6.00 | 1.2 | 398.26 | 80 | 9/10 |
| Comparative example 2-1 | 5.00 | 6.50 | 1.3 | 400.67 | 80 | 7/10 |
| Comparative example 2-2 | 5.00 | 7.50 | 1.5 | 406.66 | 80 | 7/10 |
| Comparative example 2-3 | 5.00 | 3.50 | 0.7 | 392.12 | 80 | 6/10 |
| Comparative example 2-4 | 5.00 | 2.50 | 0.5 | 392.41 | 80 | 7/10 |
| Example 2-5 | 5.00 | 4.00 | 0.8 | 142.56 | 30 | 9/10 |
| Example 2-6 | 5.00 | 4.00 | 0.8 | 742.56 | 150 | 10/10 |
| Example 2-7 | 5.00 | 4.00 | 0.8 | 992.56 | 200 | 10/10 |
| Example 2-8 | 5.00 | 4.00 | 0.8 | 1642.56 | 330 | 10/10 |
| Comparative example 2-5 | 5.00 | 4.00 | 0.8 | 132.56 | 28 | 5/10 |
| Example 2-9 | 10.00 | 4.00 | 0.40 | 772.56 | 80 | 9/10 |
| Example 2-10 | 30.00 | 4.00 | 0.13 | 2292.56 | 80 | 8/10 |
| Example 2-11 | 20.00 | 4.00 | 0.20 | 1532.56 | 80 | 8/10 |
| Comparative example 2-6 | 35.00 | 4.00 | 0.11 | 2672.56 | 80 | 7/10 |

From Examples 1-1 and 2-1 to 2-4 and Comparative examples 2-1 to 2-4 in Table 2, it can be learned that the width w1 of the second sealing segment 120 and the radius r of the arc-shaped outer edge satisfy $0.8 \leq r/w1 \leq 1.2$, and the manufactured cell 1 excels in the hot-box test; and when r/w1 is less than the lower limit of 0.8 or greater than the upper limit

of 1.2, the pass rate of the cell 1 in the hot-box test declines.

From Examples 1-1 and 2-5 to 2-11 and Comparative examples 2-5 and 2-6 in Table 2, it can be learned that when the sum A of the orthographic projection areas of the second sealing segment 120 and the third sealing segment 130 satisfies 142.56 $mm^2 \leq A \leq 2292.56$ $mm^2$, the manufactured cell 1 excels in the hot-box test; and when A is less than the lower limit of 142.56 $mm^2$ or greater than the upper limit of 2292.56 $mm^2$, the pass rate of the cell 1 in the hot-box test declines.

From Examples 1-1 and 2-5 to 2-8 and Comparative example 2-5 in Table 2, it can be learned that the total length $L_w$ of the packaging bag 30 in the length direction X of the cell 1 satisfies 30 mm$\leq L_w \leq$330 mm, and the manufactured cell 1 excels in the hot-box test.

Results of the performance tests on the manufactured cell 1 in Examples 1-1 and 3-1 to 3-12 and Comparative examples 3-1 to 3-1 are shown in Table 1.

**Table 3**

| Item | α (°) | L1 (mm) | L2 (mm) | Vibration test | High-temperature cycling test |
|---|---|---|---|---|---|
| Example 1-1 | 10.00 | 20.00 | 30 | 9/10 | 83.00% |
| Example 3-1 | 30.00 | 20.00 | 30 | 10/10 | 85% |
| Example 3-2 | 50.00 | 20.00 | 30 | 10/10 | 84.50% |
| Example 3-3 | 80.00 | 20.00 | 30 | 10/10 | 84.10% |
| Comparative example 3-1 | 90.00 | 20.00 | 30 | 8/10 | 81.50% |
| Comparative example 3-2 | 5.00 | 20.00 | 30 | 8/10 | 80.50% |
| Example 3-4 | 30.00 | 2.00 | 30 | 9/10 | 82.60% |
| Example 3-5 | 30.00 | 10.00 | 30 | 10/10 | 83.90% |
| Example 3-6 | 30.00 | 40.00 | 30 | 10/10 | 83.50% |
| Example 3-7 | 30.00 | 60.00 | 30 | 10/10 | 83.10% |
| Example 3-8 | 30.00 | 20.00 | 2 | 9/10 | 82.50% |
| Example 3-9 | 30.00 | 20.00 | 10 | 10/10 | 83.50% |
| Example 3-10 | 30.00 | 20.00 | 30 | 10/10 | 83.70% |
| Example 3-11 | 30.00 | 20.00 | 40 | 10/10 | 84.10% |
| Example 3-12 | 30.00 | 20.00 | 60 | 9/10 | 83.10% |

From Example 1-1 and 3-1 to 3-3 and Comparative example 3-1 to 3-3 in Table 3, it can be learned that the included angle $\alpha$ between the tangent line at the midpoint of the arc-shaped outer edge and the extension line of the first outer edge 112 satisfies $10° \leq \alpha \leq 80°$, and the manufactured cell 1 excels in the high-temperature cycling test and the vibration test. When $\alpha$ is less than the lower limit of 10° or greater than the upper limit of 80°, a cutting angle for the corner part is inappropriate. On one hand, the overflowing glue cannot be completely removed. On the other hand, this may easily result in a small effective sealing area at the third sealing segment 130, leading to insufficient sealing and poor vibration resistance performance of the cell 1.

From Example 3-4 to 3-7 in Table 3, it can be learned that the distance L1 between the second outer edge 122 of the second sealing segment 120 connected to the first corner-cutting segment 1301 and the positive electrode tab 10 satisfies 2 mm$\leq$L1$\leq$60 mm, a distance L2 between the second outer edge 122 of the second sealing segment 120 connected to the second corner-cutting segment 1302 and the negative electrode tab 20 satisfies 2 mm$\leq$L2$\leq$60 mm, and the manufactured cell 1 excels in the high-temperature cycling test and the vibration test.

Results of the performance tests on the manufactured cell 1 in Examples 1-1 and 4-1 to 4-5 and Comparative example 4-1 are shown in Table 1.

**Table 4**

| Item | H (mm) | h1 (μm) | Low-temperature discharge performance | High-temperature cycling test |
|---|---|---|---|---|
| Example 1-1 | 0.15 | 40.00 | 86.50% | 83.00% |

(continued)

| Item | H (mm) | h1 (μm) | Low-temperature discharge performance | High-temperature cycling test |
|---|---|---|---|---|
| Example 4-1 | 0.23 | 40.00 | 87.00% | 83.50% |
| Example 4-2 | 0.30 | 40.00 | 86.10% | 82.70% |
| Example 4-3 | 0.23 | 20.00 | 84.60% | 82.60% |
| Example 4-4 | 0.23 | 60.00 | 86.80% | 83.20% |
| Comparative example 4-1 | 0.23 | 70.00 | 83.50% | 81.50% |
| Comparative example 4-2 | 0.40 | 10.00 | 82.40% | 80.90% |

From Example 1-1, 4-1, and 4-2 and Comparative example 4-2 in Table 4, it can be learned that the thickness H of the sealing region 100 satisfies 0.15 mm≤H≤0.3 mm, and the cell 1 has excellent low-temperature discharge performance and excels in the high-temperature cycling test.

From Examples 1-1, 4-3, and 4-4 and Comparative examples 4-1 and 4-2 in Table 4, it can be learned that the thickness h1 of the aluminum layer 32 satisfies 20 μm≤h1≤60 μm, and the cell 1 has excellent low-temperature discharge performance and excels in the high-temperature cycling test.

In the accompanying drawings of these embodiments, a same or similar reference sign corresponds to a same or similar component. It should be understood that in the descriptions of this application, terms such as "up," "down," "left," and "right" indicate orientations or position relationships based on orientations or position relationships shown in the accompanying drawings. These terms are used merely for the convenience of describing this application and simplifying the descriptions, and do not indicate or imply that a referred apparatus or component must have a specific orientation or be constructed and operated in the specific orientation. Therefore, the terms used to describe position relationships in the accompanying drawings are merely used for illustration and should not be construed as limitations to this patent. Persons skilled in the art can understand the specific meanings of these terms based on the context.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to these embodiments that can be conceived by persons skilled in the art, and other manners constructed by combining some of the constituent elements in these embodiments are also included in the scope of this application.

## Claims

1. A cell, comprising a positive electrode tab, a negative electrode tab, and a packaging bag, wherein the packaging bag has a sealing region;

    the sealing region comprises a first sealing segment, two second sealing segments, and a third sealing segment; the positive electrode tab and the negative electrode tab are arranged side by side in a width direction of the cell, and both extend beyond the packaging bag through the first sealing segment; the second sealing segment and the first sealing segment are arranged at an included angle; the third sealing segment is connected between the first sealing segment and the second sealing segment; and the third sealing segment has a curved outer edge; and

    the third sealing segment has an orthographic projection area S in a thickness direction of the cell; the third sealing segment comprises a first corner-cutting segment disposed on a side of the positive electrode tab far away from the negative electrode tab in the width direction of the cell and a second corner-cutting segment disposed on a side of the negative electrode tab far away from the positive electrode tab in the width direction of the cell; and S comprises an orthographic projection area S1 of the first corner-cutting segment in the thickness direction of the cell and an orthographic projection area S2 of the second corner-cutting segment in the thickness direction of the cell, wherein 0.75≤S1/S2≤0.99.

2. The cell according to claim 1, wherein the curved outer edge has a first endpoint, a first tangent line passing through the first endpoint, a second endpoint, and a second tangent line passing through the second endpoint;

the first sealing segment has a first inner edge and a first outer edge parallel to each other; the first outer edge is connected to the first endpoint; the second sealing segment has a second inner edge and a second outer edge parallel to each other; and the second outer edge is connected to the second endpoint; and
the third sealing segment is defined by the curved outer edge, a first straight line that passes through the first endpoint and is perpendicular to the first tangent line, a second straight line that passes through the second endpoint and is perpendicular to the second tangent line, the first inner edge, and the second inner edge.

**3.** The cell according to claim 2, wherein a preset corner-cutting region is defined by the curved outer edge, an extension line of the first outer edge, and an extension line of the second outer edge, and an area of the preset corner-cutting region is S', wherein $0.2 \le S'/S \le 0.5$.

**4.** The cell according to claim 2, wherein the cell further comprises a cell body, and the packaging bag has an accommodation space configured to accommodate the cell body;

the second sealing segment and the third sealing segment are disposed on a side of the second inner edge far away from the accommodation space in the width direction of the cell, and a sum of orthographic projection areas of the second sealing segment and the third sealing segment in the thickness direction of the cell is A, wherein $142.56\ mm^2 \le A \le 2292.56\ mm^2$; and/or
a total length of the packaging bag in a length direction of the cell is $L_w$, wherein $30\ mm \le L_w \le 330\ mm$.

**5.** The cell according to claim 3, wherein

the first outer edge and the first tangent line are collinear; and/or
the second outer edge and the second tangent line are collinear; and/or

$$0.2 \le S'/S \le 0.35.$$

**6.** The cell according to claim 1, wherein $0.80 \le S1/S2 \le 0.90$.

**7.** The cell according to claim 1, wherein a width of the second sealing segment in the width direction of the cell is w1, the curved outer edge is an arc-shaped outer edge, and a radius of the arc-shaped outer edge is r, wherein $0.8 \le r/w1 \le 1.2$.

**8.** The cell according to claim 7, wherein the first sealing segment has a first outer edge connected to the arc-shaped outer edge, and an included angle $\alpha$ exists between a tangent line at a midpoint of the arc-shaped outer edge and an extension line of the first outer edge, wherein $10° \le \alpha \le 80°$; and/or $5\ mm \le w1 \le 10\ mm$.

**9.** The cell according to claim 1, wherein one of the second sealing segments is connected to the first corner-cutting segment, the other second sealing segment is connected to the second corner-cutting segment, and the second sealing segments have a second outer edge;

in the width direction of the cell, a distance between the second outer edge of the second sealing segment connected to the first corner-cutting segment and the positive electrode tab is L1, wherein $2\ mm \le L1 \le 60\ mm$; and/or
in the width direction of the cell, a distance between the second outer edge of the second sealing segment connected to the second corner-cutting segment and the negative electrode tab is L2, wherein $2\ mm \le L2 \le 60\ mm$.

**10.** The cell according to claim 1, wherein in the thickness direction of the cell, a thickness of the sealing region is H, wherein $0.15\ mm \le H \le 0.3\ mm$.

**11.** The cell according to claim 1, wherein the packaging bag is an aluminum plastic film, the aluminum plastic film comprises a middle substrate, aluminum layers disposed on two opposite sides of the middle substrate, a bonding layer disposed on a surface of the aluminum layer, and a thickness of each of the aluminum layers is h1, wherein $20\ \mu m \le h1 \le 60\ \mu m$.

**12.** The cell according to claim 1, wherein the cell further comprises a cell body;

the packaging bag comprises one layer of aluminum plastic film, the aluminum plastic film wraps from one side of

the cell body to another side of the cell body, and bonding is performed on the aluminum plastic film on an outer side of the cell body to form the sealing region comprising one first sealing segment, two second sealing segments, and two third sealing segments; or
the packaging bag comprises two layers of aluminum plastic film, the cell body is sandwiched between the two layers of aluminum plastic film, and bonding is performed on the aluminum plastic film on an outer side of the cell body to form the sealing region comprising two first sealing segments, two second sealing segments, and four third sealing segments.

**13.** A battery, comprising:

a housing; and
the cell according to any one of claims 1 to 12, wherein the cell is disposed in an internal space of the housing.

20
130（1302）
10
1
110
130（1301）
100
X
Z
120
Y
120
40

FIG. 1

100（120）
200
30
40
100（120）

FIG. 2

L1
10
20
L2
110
102
300
300
130（1301）
101
130（1302）
120
120
X
Y
200
40

FIG. 3

134
132
136
110
112
111
10
131
135
133
137
122
120
121
40

FIG. 4

134
110
112
111
10
α
r
131
O
122
120
121
40

FIG. 5

H
h1
33
32
31
32
33

FIG. 6

10
20
130（1301）
110
130（1302）
300
120
120
X
Y
200
40
130（1301）
110
130（1302）

FIG. 7

## INTERNATIONAL SEARCH REPORT

International application No.
**PCT/CN2024/125884**

**A. CLASSIFICATION OF SUBJECT MATTER**

H01M10/0525(2010.01)i；H01M50/186(2021.01)i；H01M50/531(2021.01)i；H01M50/533(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 密封, 封边, 封装, 弧形, 切角, 面积, battery, cell, sealing, packaging, arc, corner, cut, area

**C. DOCUMENTS CONSIDERED TO BE RELEVANT**

| Category* | Citation of document, with indication, where appropriate, of the relevant passages | Relevant to claim No. |
|---|---|---|
| PX | CN 117174986 A (XIAMEN AMPACE TECHNOLOGY LTD.) 05 December 2023 (2023-12-05)<br>claims 1-13 | 1-13 |
| A | CN 216624422 U (ZHUHAI COSMX BATTERY CO., LTD.) 27 May 2022 (2022-05-27)<br>entire document | 1-13 |
| A | CN 110336070 A (EVERGRANDE NEOENERGY TECHNOLOGY GROUP CO., LTD.) 15 October 2019 (2019-10-15)<br>entire document | 1-13 |
| A | CN 217009349 U (DONGGUAN NVT TECHNOLOGY CO., LTD.) 19 July 2022 (2022-07-19)<br>entire document | 1-13 |
| A | JP 2013140825 A (ASAHI KASEI CORP.) 18 July 2013 (2013-07-18)<br>entire document | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 January 2025** | **13 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2024/125884**

| Patent document cited in search report | Publication date (day/month/year) | Patent family member(s) | Publication date (day/month/year) |
|---|---|---|---|
| CN 117174986 A | 05 December 2023 | None | |
| CN 216624422 U | 27 May 2022 | None | |
| CN 110336070 A | 15 October 2019 | CN 209981395 U | 21 January 2020 |
| CN 217009349 U | 19 July 2022 | None | |
| JP 2013140825 A | 18 July 2013 | None | |

Form PCT/ISA/210 (patent family annex) (July 2022)